# EUROPEAN PATENT APPLICATION

(11) **EP 0 813 328 A2**
(43) Date of publication of application: **17.12.1997**
(21) Application number: 97304166.8
(22) Date of filing: 13.06.1997
(51) Int. Cl.: H04M 1/02, H04M 1/23

(54) **Touch screen keyboard**

(30) Priority: 13.06.1996 US 663354
(71) Applicant: NOKIA MOBILE PHONES LTD., 02150 Espoo (FI)
(72) Inventor: Paajanen, Reijo, Grapevine, Texas 76051 (US); Marttila, Matti, Minato-ku, Tokyo 105 (JP); Jormalainen, Janne, 4020 Irving, Texas 75038 (US)
(74) Representative: Potter, Julian Mark

(57) **Abstract**

A removable cover for use with a personal communicator of the type having a touch screen display includes a plurality of key members which can be depressed by a user such that the underlying portions of the touch screen display are activated while simultaneously giving the user the feel and accuracy of an actual mechanical switching mechanism.

## Description

The present invention relates to copending U.S. Application No. 08/418,585 entitled "KEYBOARD", which application being commonly assigned to the assignee of the present invention.

The present invention relates to a personal communicator, and deals more particularly with a hand held telephone having a touch screen display onto which is superimposed a removable cover which includes a mechanical keyboard coacting with the touch screen display to provide the user with a comfortable feel of the keyboard in activating the touch screen display.

Typically, personal communicators, e.g., mobile telephones, have large displays for showing information to the user. The display is normally used to show information input to the device by the keyboard as well as showing various menus of the operating system and user information, such as in the case with a facsimile transmission. Thus the display has traditionally been an output device. However, touch screen displays are presently available which allow the user to input information into the device by touching localized areas of the display screen. These localized touch sensitive areas are usually marked by indicia which identifies the area as corresponding to the input of a given data when this area is depressed. Additionally, such touch screen display may further include a writing surface onto which the user may hand write data to the display and through appropriate hand written recognition software will interpret the hand written text for use such as by transmission to another device. Also, there may be icons presented on the display in addition to the localized touch sensitive areas that may be tapped using a stylus or like member to effect information input to the device. The localized touch sensitive areas present a small virtual keyboard which is displayed on a dedicated portion of the display screen, and by putting pressure on the numbers and/or letters to be input to the device, for example, a telephone call is initiated. However, the problem with such touch screen input apparatus is that the user does not get a comfortable feel of a keyboard by simply touching the touch sensitive keypad area.

Accordingly, in a first aspect of the invention, there is provided CLAIM 1.

According to a second aspect of the invention there is provided a personal communicator in combination with the cover.

A preferred embodiment in accordance with an aspect of the invnetion may advantageously provide a cover which is usable with a virtual keyboard, and which renders a comfortable feel of depressing a mechanical keyboard to affect activation of a given area of a virtual keyboard screen display.

Suitably, the removable cover can be removed from the virtual keyboard so as to allow operations, such as handwriting onto the display and/or activation of icons, by the touching or use of a stylus thereon.

Other advantages of the present invention will become apparent from the following description and the appended claims.

Fig. 1 illustrates a plan view of a personal communicator shown with a virtual touch screen display shown without the cover superimposed on it.

Fig. 2 is a side elevation view of the personal communicator of Fig. 1 showing the cover in a partially deployed condition.

Fig. 3 is a partially fragmentary sectional view taken through the display cover of Fig. 2.

The present invention resides in a personal communicator of the type having a touch sensitive keyboard, and with a cover removably overlaying the touch sensitive keyboard. The cover is comprised of a base member having a substantially planar configuration. A plurality of key members are mounted to the base member for movement in an inward direction toward the personal communicator touch sensitive surface such that the position of each of the key members corresponds in registration to an underlying area of the touch sensitive surface representing a data input touch zone of the touch sensitive keyboard. A means is also provided for removable connecting the cover to the personal communicator.

The cover may have a first given length and the communicator has an output screen of a second given length and the touch sensitive keyboard has a third given length such that the first and second given lengths are substantially the same. Alternatively, the cover first given length may be shorter than the touch sensitive keyboard third given length to expose a portion of the touch sensitive keyboard.

Preferably, the cover base member includes a plurality of recesses in which are disposed each of the key members. Each of the recesses includes a bottom stop surface confronting the undersurface of each of the key members with each key member associated with each of the recesses being supported in a spaced orientation above the stop surface of the recess when the cover member is superimposed over the touch sensitive keyboard.

In a preferred embodiment, a mounting opening extends through the undersurface of the cover member and communicates with an associated one of the recesses, with each of the mounting openings having an elongated spring member disposed therein which connects to the key member at one and to a rubber pad at the other end.

Ideally, the spacing between the undersurface of the key member and the recess bottom stop surface is such that the play in the elongated spring member is taken up before the key member engages the stop surface of the recess.

Preferably, the cover member is movably connected to the personal communicator through a two hinge connection and the two hinge connection includes an intermediate connecting piece connecting the cover to the other end of the personal communicator such that the cover extends in a substantially planar condition over the touch sensitive keypad disposed below it. However, alteratively, the cover member may be completely removable through a snap-on/off connection.

In one configuration, the personal communicator includes a stepped portion at one end and the cover member connects to the personal communicator at the end of the communicator opposite of the stepped portion, and the cover base member includes a plurality of the mounting openings each associated with one of the key members in the cover.

A personal communicator shown generally at 2 incorporates the present invention. The personal communicator 2 can be one of any number of different devices e.g. remove control device or a Personal Digital Assistants (PDA) which include a large output display 4 and a virtual keyboard 6 disposed adjacent thereto. For purposes of the present discussion, the personal communicator referenced herein, takes the form of a hand held portable telephone.

The virtual keyboard 6 presents a touch sensitive surface 7 which has a plurality of numbered touch areas 8, 8 disposed thereon which are used to input information into the device. Along with this, there are included command icons such as illustrated at 9,9 which are further used to execute the operations functions of the communicator. Additionally, the surface 7 may also include a writing surface (not shown) onto which the user may write, and the communicator through appropriate hand writing recognition software, translates the scribed writing into computer recognizable language as is currently understood in the industry.

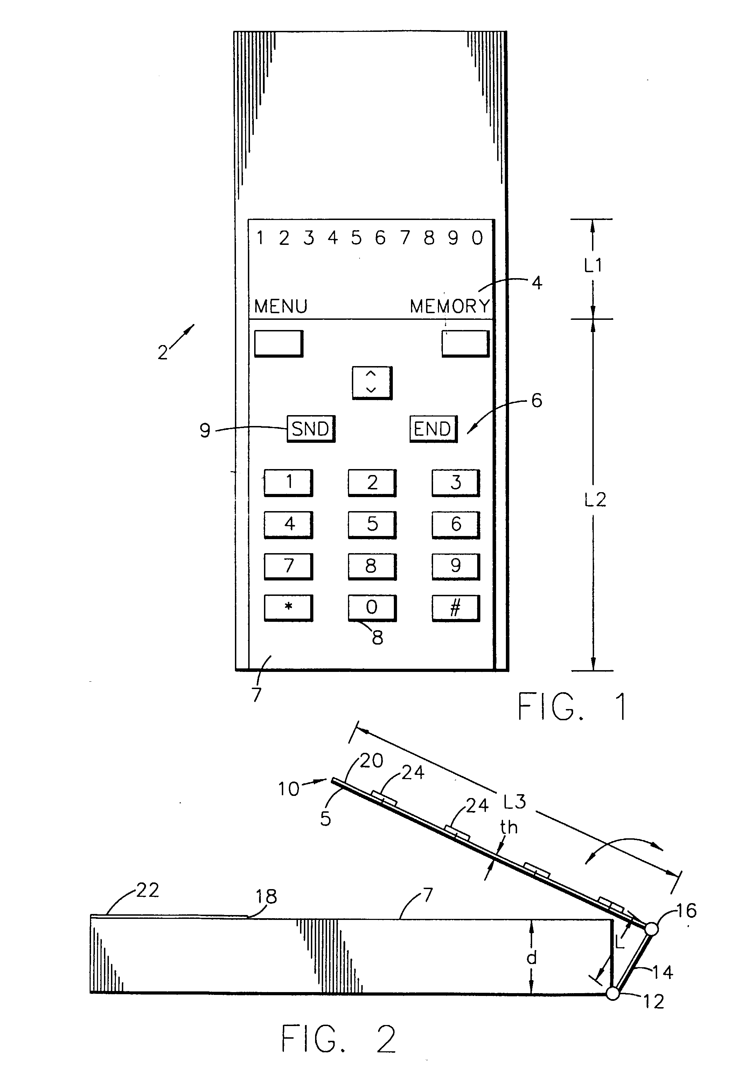

Referring now to Fig. 2, it should be seen that a removable cover 10 is provided along with the communicator 2 in accordance with the present invention and includes a generally planar base member 5 having a top surface 20 and an under surface 32 which overlies the touch sensitive surface 7 of the communicator to provide the user with the comfortable feel of depressing a mechanical keyboard to affect activation of a given area of a virtual keyboard screen display 6.

The removable cover 10 is preferably connected to the communicator at the base thereof by a hinge connection 12 which interconnects the cover 10 - with the communicator through an intermediary connector piece 14 which is in turn, hingedly connected to the cover along the base thereof at 16. The intermediate connector member 14 has a length L which is slightly longer in size than the depth dimension d of the communicator base so as to allow the cover 10 to sit flushly against the top surface 7 of the virtual keyboard 6. The communicator 2 as best seen in Fig. 2 thus has a cutout profile whereby the communicator at its top end has a stepped portion 18 ending in a top surface 22 of a height substantially equal to the thickness the of the cover 10 so that the top surface 20 of the cover 10 lies substantially coextensively with the top surface 22 of the stepped portion 18.

As best illustrated in Fig. 1, the large output display 4 has a length L1 and the virtual keyboard 6 has a length L2 while the cover 10 has a length L3 which is about equal in length the virtual keyboard length L2 so that the removable cover member 10 leaves the output display 4 substantially uncovered.

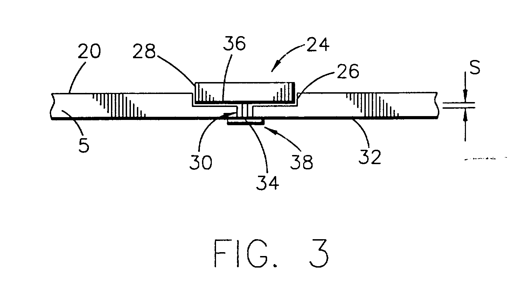

Referring now to Figs. 2 and 3, and to the detailed construction of the removable cover member 10, it should be seen that the cover 10, in addition to the base member 5, includes a plurality of mechanical key-like members 24 which are positioned in registration with corresponding ones of the touch sensitive areas 8, 8 of the surface 7 so that the corresponding ones of the key-like members 24 are positioned immediately above the respective area when the cover 10 is superimposed oyer the virtual keyboard 6. Each key member 24 is received within a recess 26 formed in the base member 5, which recesses each having a depth which is approximately equal to one half the depth of each key member such that a substantial portion thereof stands tall above the top surface 20 of the base member 5 of the removable cover 10. Each recess 26 is further defined by a bottom stop surface 28 which engages the opposed bottom surface 36 of the involved key member when the key is depressed and is brought into confronting engagement with the corresponding stop surface 28.

Mounting openings 30,30 are also formed in the base member 5 at locations corresponding to the geometric center of each of the recesses 26, and each opening communicates with the respective one of the recesses 26 and with the undersurface 32 of the cover 10 to create a passage therebetween. Disposed within each of the mounting openings 30 is a small coil spring 34 which is secured against movement at its top end to the under surface 36 of the key member 24 and at its other opposite end to a thin rubber plate 38. The length of the coil spring 34 is selected such that in its relaxed condition and the rubber plate 34 resting against the top surface 7 of the virtual keyboard, a slight spacing S exists between the stop surface 28 of the recess 26 and the undersurface 36 of the key member. In this way, the user by depressing the key member 24 causes limited axial travel of the coil spring 34 within the opening 30 so that the spacing S is somewhat reduced, and upon continued downward movement of the key member, causes total compression of the spring and thereby cause the spring to act in a rod like manner to thereby axially move the rubber plate against the corresponding touch sensitive area 8,8 of the virtual keyboard 6 and thereby effect the input of data into the personal communicator 2.

In the case where the display 4 is of a back lit type, the cover 10 may be of such material that it can illuminate the virtual keyboard by using the light of the display 4. Optionally, the cover 10 may be provided with a small opening next to every key. These openings can be used to display the change in meaning of the key in the case where a soft key is used. The cover can further be made from a transparent material so as to allow the underlying keyboard to show through in the case where the virtual display 6 is backlit.

From the foregoing, it should be seen that the invention has been described in a the preferred embodiment, but numerous substitutions and modifications can be made without departing from the spirit of the invention. For example, the length 13 of the cover 10 is disclosed as having a dimension sufficient to cover the virtual keyboard 6, but can in fact be somewhat smaller in size to expose given areas of the keyboard.

Also, the cover 10 is disclosed in the preferred embodiment as being hingedly connected to personal communicator. However, it is within the purview of the invention to have the cover completely removable from the communicator and be connectable by a snap on/off connection.

Accordingly, the invention has been described by way of illustration rather than limitation.

## Claims

1. A cover for overlaying a touch sensitive surface comprising:
a base member having a substantially planar configuration;
a plurality of key members mounted to the base member for movement in an inward direction toward a personal communicator touch sensitive surface such that the position of each of said key members corresponds in registration to an underlying area of said touch sensitive surface representing a data input touch zone;
and means for removable connecting the cover to a personal communicator.

2. A cover as defined in claim 1 further characterized in that said means for removable connecting the cover to a personal communicator includes a double hinge connection including an intermediate connecting piece connecting the cover to one end of a personal communicator such that the cover extends in a substantially planar condition over a touch sensitive keypad disposed below it.

3. A cover as defined in claim 1 or claim 2, further characterized in that said cover base member includes a plurality of recesses in which are disposed each of said key members.

4. A cover as defined in claim 3 further characterized in that each of said recesses includes a bottom stop surface confronting the undersurface of each of said key members; and
each key member associated with each of said recesses being supported in a spaced orientation above said stop surface of said recess when the cover member is superimposed over the touch sensitive surface.

5. A cover as defined in claim 3 or 4, further characterized in that each of said recesses includes a mounting opening which extends through the undersurface of said cover member and communicates with an associated one of said recesses, each of said mounting openings having an elongated spring member disposed therein which connects to the key member at one and to a rubber pad at the other end.

6. A cover as defined in claim 5 further characterized in that said spacing between said undersurface of said key member and said recess bottom stop surface is such that the play in said elongated spring member is taken up substantially before said key member bottom surface engages the stop surface of said recess.

7. A cover as defined in any preceding claim further characterized by said means for removably connecting the cover to a personal communicator includes a snap on/off connection.

8. A cover as defined in any preceding claim further characterized in that said cover base member includes a plurality of said mounting openings each associated with one of said key members in said cover.

9. A cover as defined in any preceding claim in combination with a personal communicator, wherein
the plurality of key members are mounted such that the position of each of said key members corresponds substantially in registration to an underlying area of said touch sensitive surface representing the data input touch zone.

10. The combination as set forth in claim 9 further characterized in that said cover is removably connected to the personal communicator.

11. The combination as set forth in claim 9 or 10 further characterized in that said personal communicator has a stepped profile at one end and said cover connects to said personal communicator at the end of the communicator opposite of the stepped portion.

12. The combination as set forth in any of claims 9 to 11 further characterized in that said cover is connected to the personal communicator through a two hinge connection and said two hinge connection includes an intermediate connecting piece connecting the cover to the other end of said personal communicator such that the cover extends in a substantially planar condition over the touch sensitive keypad disposed below it.

13. The combination as set forth in any of claims 9 to 12 further characterized by said cover being of a first given length and said communicator having an output screen of a second given length and said touch sensitive keyboard having a third given length such that said first and second given lengths are substantially the same.
